(19) Europäisches Patentamt

European Patent Office

Office européen des brevets

(11) **EP 2 942 146 A2**

(12) **EUROPEAN PATENT APPLICATION**

(43) Date of publication:
**11.11.2015 Bulletin 2015/46**

(21) Application number: **15157935.6**

(22) Date of filing: **06.03.2015**

(51) Int Cl.:
*B23K 28/02* (2014.01)      *B23K 9/167* (2006.01)
*B23K 9/18* (2006.01)        *B23K 9/025* (2006.01)
*B23K 11/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **08.04.2014 KR 20140041892**

(71) Applicant: **Steel Flower Co., Ltd.
Busan 612-020 (KR)**

(72) Inventor: **Kim, Byeong Kwen
609-751 Busan (KR)**

(74) Representative: **Von Kreisler Selting Werner -
Partnerschaft
von Patentanwälten und Rechtsanwälten mbB
Deichmannhaus am Dom
Bahnhofsvorplatz 1
50667 Köln (DE)**

(54) **COMBINATION WELDING METHOD OF SIMULTANEOUSLY PERFORMING RESISTANCE WELDING, TUNGSTEN ARC WELDING AND SUBMERGED ARC WELDING**

(57)     There is provided a combination welding method performed by leading with a tungsten arc welding method and following with a submerged arc welding method by keeping a predetermined separation distance from the tungsten arc weld zone. According to the combination welding method of the present invention, the occurrence of bending of a steel pipe is reduced and a welding time is shortened since the inside welding and the outside welding are simultaneously performed by keeping the predetermined separation distance. In addition, since the outside welding is performed before a fusion area temperature is below an A1 transformation point after the inside welding, the bending of the steel pipe is properly controlled after the welding and therefore straightening time in a post-process is shortened.

Uncoiler
-feeding raw
material coil

Leveler
-leveling the raw
material coil

Forming
-forming a pipe form
using rollers

Welder
-welding using ERW
method

06. Inside Welding
-inside welding using
SAW method

07. Long Seam Milling
-removing outside
1-pass using milling
method for welding
quality improvement

08. Outside Welding
-outside welding using
SAW method

**Fig.1**

EP 2 942 146 A2

**Description**

**CROSS-REFERENCE TO RELATED APPLICATION**

This application claims the benefit of Korean Patent Application No. 10-2014-0041892, filed on April 8, 2014.

**BACKGROUND OF THE INVENTION**

1. Field of the Invention

The present invention relates to a combination welding method of simultaneously welding an inside surface and an outside surface of a steel pipe by leading with tungsten arc welding to the inside surface of the steel pipe and following with submerged arc welding to the outside surface of the steel pipe by keeping a predetermined separation distance between an inside welding point and an outside weldingpoint, in a combination method for manufacturing steel pipes.

2. Description of the Related Art

Of the methods for manufacturing steel pipes, a welding method having a good low-temperature impact value is a seamless steel pipe method. However, the seamless steel pipe method is high in supply price and requires a relatively long period for supply, compared with other welding methods. In a shipbuilding company which is a source of demand, the just-in-time supply of seamless steel pipes is a very important factor in meeting the deadline in building a ship.
Electric resistance welding is a method of welding workpieces to be welded by facing the workpieces against each other, generating resistance heat by applying current and compressing the heat to produce a weld. Since this electric resistance welding method produces the weld at a very fast speed, it has the advantage of high productivity. Therefore, the electric resistance welding method is mostly used for tube milling of hot rolled coils.
However, metal flow occurs in the weld zone using the electric resistance welding method. If the workpieces include a crack or coarse inclusion, a crack occurs in the weld zone. As shown in Table 1, since the low-temperature impact value is very low, the welded workpieces are not proper to be used as steel pipe for piping. However, if the steel pipe is manufactured using the seamless steel pipe method, since the price is higher by about twice or more than the steel pipe using the electric resistance welding method, there have been difficulties inpriceto apply the seamless steel pipe method to the steel pipe to the field.

Table 1

|  |  |  | Electric resistance welding (ERW) | Submerged arc welding (SAW) | Remarks |
|---|---|---|---|---|---|
| Mechanical properties | Low-temperature impact value | -40°C | Impossible Impact warranty (27Jule at 0°C) | 48 Jule | Extent of excellence in mechanical properties: |
|  |  | -60°C |  | 27 Jule |  |
|  | Tensile strength |  | Based on API 5L X-52:510MPa | Based on API 5L X-52:530MPa |  |
|  |  |  |  |  | Seamless>SAW>E RW |

Table 1 above provides the mechanical properties of the weld zone according to the welding methods.
The submerged arc welding is a method for welding two or more workpieces to be joined together by using heat obtained by generating an arc between a wire and a base material under granular flux. The welding is performed by continuously feeding the electric current charged wire into the granular flux pre-layered on the base material. The arc is not shown to the outside since it is covered by the flux. The flux protects the arc by blocking the atmosphere when refining the welded metal. The flux contributes to the formation of the welding bead or slag.
The submerged arc welding method is used a lot as a highly efficient joining technique of thick plate steel for pipes since the size of the welding rod and the current to be used are great, the depth of weld penetration is deep. Due to these good welding characteristics, the submerged acc welding method is considered as a representative of a highly efficient welding method having the mechanical properties that the low-temperature impact value is excellent and the tensile strength is not much different from those of the seamless steel pipe methodas shown in Table 1.

Since the steel pipe using the submerged arc welding method has no difference in the mechanical properties from the seamless steel pipe, the applicant of the present application had registered a combination welding method of performing electric resistance welding and submerged arc welding (Korean Patent Registration Publication No. 10-1191711 published on October 10, 2012) to meet the request for prompt period of supply/delivery.

According to the conventional combination welding method using the electric resistance welding and the submerged arc welding (hereinafter, referred to as the 'prior art'), it is possible to manufacture steel pipes at a fast speed, compared with the use of the previous submerged arc welding method only. It is also possible to manufacture steel pipes having better mechanical properties, compared with the use of the previous electric resistance welding method. Further, the manufacturing processes are shortened to reduce the process equipment and the manufacturing processes are simplified to reduce the production cost.

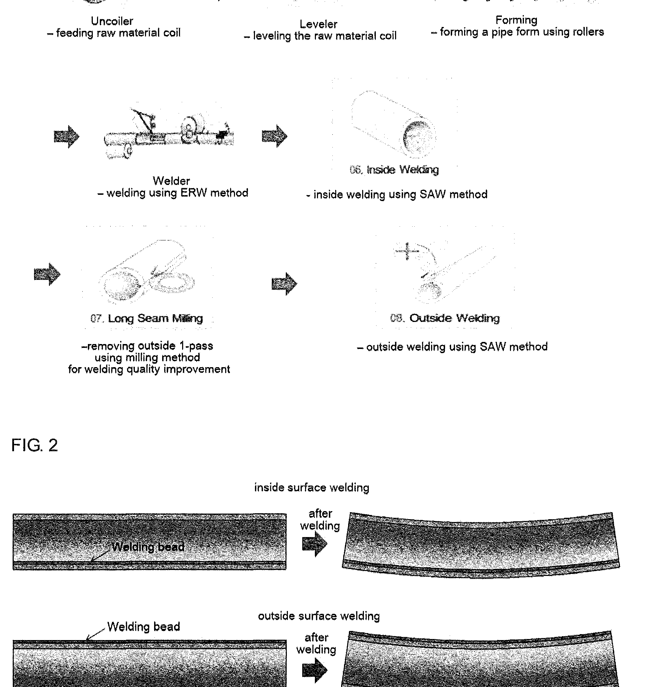

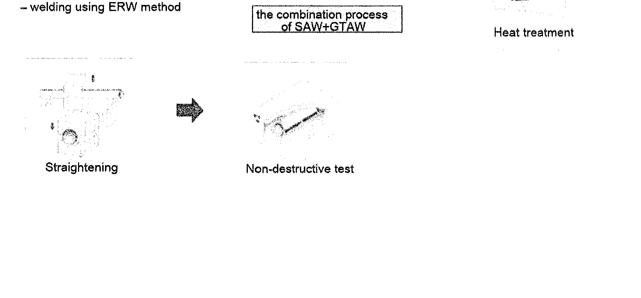

However, in the welding method according to the prior art as shown in FIG. 1, after tack welding is performed using the electric resistance welding method, since the inside surface of a steel pipe is first welded by the submerged arc welding method and then the outside surface thereof is welded, a fusion area of a weld zonesolidifies and contracts after welding the inside surface of the steel pipe, occurring bending toward the inside of the steel pipe, as shown in FIG. 2. The reason why the bending phenomenon occurs is because the fusion area solidifies at the temperature of 1500 °C or higher and steel contracts as it passes an A1 transformation pointof steel (723 °C).

When the outside surface of the steel pipe is welded using the submerged arc welding method after the first welding of the inside surface of the steel pipe is performed, since the fusion area of the weld zonesolidifies and contracts after the inside welding, bending occurs toward the outside of the steel pipe. However, even though the outside surface of the steel pipe is welded, there occurs no bending sufficient to correct the bending which occurred upon the first welding to the inside surface of the steel pipe to the original state.

Even if the welding method is to be changed so as to simultaneously perform the inside welding and the outside welding of the steel pipe in order tosolve the aforementioned problem(s), since the submerged arc welding method needs the flux and the supplied flux drops downwardly in any one place of the inside surface and outside surface, it is impossible to perform normal welding.

Tungsten arc welding is a method of welding a base material by using heat obtained by generating an arc between a tungsten electrode and the base material in an inert gas atmosphere, with no flux. The tungsten arc welding method is slower in welding speed, compared with the submerged arc welding method. However, since the arc is stable and the quality of the weld zone is excellent, the tungsten arc welding method is used to weld the materials sensitive to oxidation or nitration. The advantages of the tungsten arc welding method are that there is no need to remove slag after welding, no flux is needed, the deformation of the weld zone is small, and all-position welding is possible.

When the tungsten arc welding method needing no flux, having high quality weld zone and enabling all-position welding is applied to the inside welding of the steel pipe and the submerged arc welding method is applied to the outside welding of the steel pipe, it is possible to simultaneously perform the inside and outside welding of the steel pipe.

Prior Art Literature

Patent Documents

(Patent Document 0001) Korean Patent Registration Publication No. 10-1191711 (October 10, 2012)
(Patent Document 0002) Korean Patent Laid-Open Publication No. 10-2009-0130955 (December 28, 2009)

SUMMARY **OF THE INVENTION**

Therefore, it is an object of the present invention to solve the above problems and to provide acombination welding method of simultaneously performing tungsten arc welding and submerged arc welding, to prevent the occurrence of excessive bending toward the inside of a steel pipe during the processes of welding an inside surface and an outside surface of the steel pipe, thereby shortening the welding time and straightening time and improving welding productivity.

In accordance with an embodiment of the present invention, there is provided a combination welding method comprising the steps of:

forming a steel sheet in the form of a steel pipe by using forming rollers;
performing electric resistance welding to ends to be joined together in the roll-formed steel pipe;
performing tungsten arc welding to an inside surface of the ends of the steel pipe; and
performing submerged arc welding to an outside surface of the ends of the steel pipe,
wherein the inside surface of the ends of the steel pipe is welded by leading with the tungsten arc welding and simultaneously the outside surface of the ends of the steel pipe is welded by following with the submerged arc welding by keeping a separation distance of 100~150mm from a tungsten arc weld zone, so that the outside welding can proceed before a fusion area goes down below an A1 transformation point after the inside welding and after welding, bending of the steel pipe is controlled to shorten a straightening time in a post-process.

Preferably, the step of forming the steel pipe may follow the steps of: cutting a raw material; feeding a coil of the raw material (uncoiling); and leveling the fed coil of the raw material.

Preferably, the combination welding method may further comprise: the step of performing scaling to the inside surface of the steel pipe using a buffing device and forming a groove in the weld zone of the outside surface of the steel pipe between the step of performing the electric resistance welding and the step of performing the tungsten arc welding to the ends of the steel pipe formed by the rollers.

Preferably, the separation distance between the tungsten arc weld zone and the submerged arc weld zone may be increased if an outside temperature is high and it may be decreased if the outside temperature is low.

Preferably, the step of performing the submerged arc welding to the outside surface of the steel pipe may be followed with the steps of: performing heat-treatment to the welded steel pipe; straightening the heat-treated steel pipe; performing a beveling process to the straightened steel pipe; and performing a non-destructive test to the beveling processed steel pipe.

Preferably, the size of the steel pipe to which the combination welding method applies may be 8~14 inches.

Preferably, the thickness of the steel pipe to which the combination welding method applies may be 7.0~22.2mm and the length of the steel pipe may be 12meters.

Preferably, the steel pipe may be manufactured by the combination welding method.

## BRIEF DESCRIPTION OF THE DRAWINGS

The above and other features and advantages of the present invention will become more apparent to those of ordinary skill in the art by describing in detail preferred embodiments thereof with reference to the attached drawings in which:

FIG. 1 is a manufacturing process drawing applying the conventional electric resistance welding and submerged arc welding methods;
FIG. 2 is an example view showing a bending defect of a steel pipe which occurred by the manufacturing process of FIG. 1;
FIG. 3 is a schematic view of a combination welding method of simultaneously performing tungsten arc welding and submerged arc welding according to the present invention;
FIG. 4 is a welding flow chart of the combination welding method according to the present invention;
FIG. 5 is a schematic view showing the measurement of the straightness of the steel pipe after welding; and
FIG. 6 is a cross-sectional view showing weld zones where the prior art and the present invention are respectively applied.

## DETAILED DESCRIPTION OF THE PREFERRED EMBODIMENT

The present invention will now be described more fully hereinafter with reference to the accompanying drawings, in which a preferred embodiment of the invention is shown so that those of ordinary skill in the art can easily carry out the present invention.

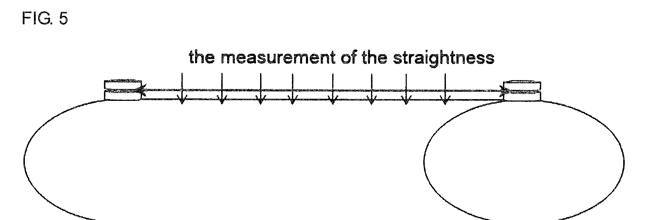

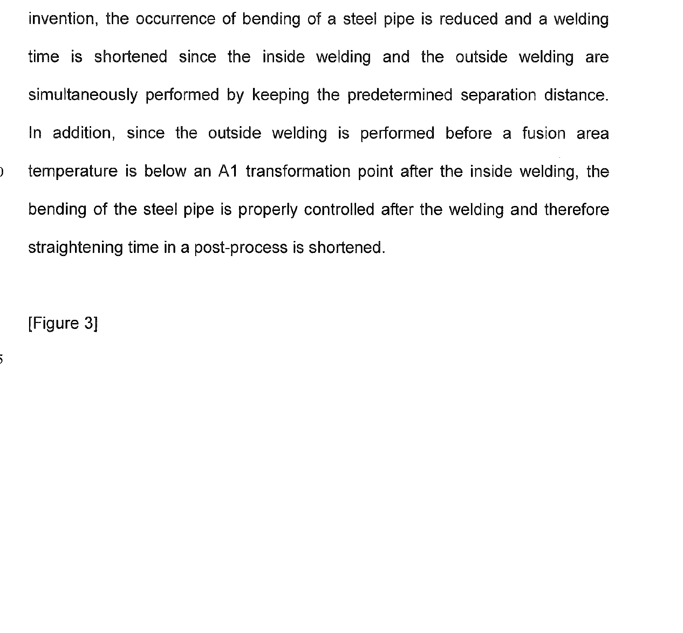

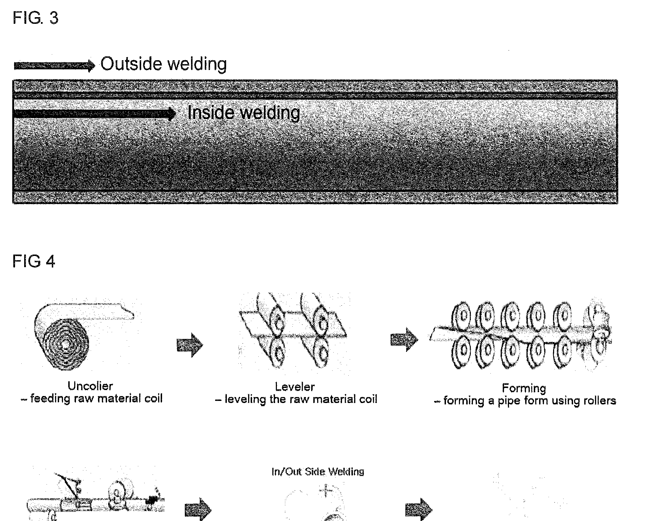

FIG. 1 is a manufacturing process drawing applying the conventional electric resistance welding and submerged arc welding methods, FIG. 2 is an example view showing a bending defect of a steel pipe which occurred by the manufacturing process of FIG. 1, FIG. 3 is a schematic view of a combination welding method of simultaneously performing tungsten arc welding and submerged arc welding according to the present invention, FIG. 4 is a welding flow chart of the combination welding method according to the present invention, FIG. 5 is a schematic view showing the measurement of the straightness of the steel pipe after welding, and FIG. 6 is a cross-sectional view comparatively showing weld zones where the prior art and the present invention are respectively applied.

FIG. 1 shows the process of manufacturing a steel pipe, using the conventional combination welding method of performing the electric resistance welding and the submerged arc welding. First, a raw material coil is fed; second, the raw material coil is leveled; third, the leveled raw material is formed in the form of a steel pipe, using forming rollers; fourth, after both ends of the steel pipe to be joined together are placed to face each other, the current is applied to generate resistance heat and the resistance heat is compressed to produce a weld. The fast process of the electric resistance welding is used until the fourth step. After that, the submerged arc welding method is used to produce the weld. After the steel pipe welded using the electric resistance welding method is fit-up, the following processes are performed: fifth, an inside welding process of the steel pipe, sixth, a long seam milling process to an outside weld zone of the steel pipe, and seventh, an outside welding process of the steel pipe.

The aforementioned prior art has the advantagesin that: it is possible to fast manufacture the steel pipe, compared with the previous single submerged arc welding method only, it is possible to manufacture the steel pipe having good mechanical properties, compared with the previous electric resistance welding method, the manufacturing process is shortened to reduce the process equipment, and the manufacturing process is simplified to reduce the production cost.

However, in the prior art, when the inside surface of the steel pipe is welded using the submerged arc welding method after tack welding is performed using the electric resistance welding method, a fusion area of the weld zone solidifies and contracts after the inside welding, resulting in a bending toward the inside of the steel pipe, as shown in FIG. 2. The reason why this phenomenon occurs is because the fusion area solidifies at a temperature of 1500°C or higher and steel contractspassing an A1 transformation point (723°C) of steel.

When the outside surface of the steel pipe is welded using the submerged arc welding method, the fusion area of the weld zone solidifies and contracts after the inside welding, resulting in bending toward the outside of the steel pipe. However, in the combination welding method of the prior art, even though the outside welding is performed, there occurs little bending which is sufficient to correct the extent of the bending which occurred upon the inside welding to the original state.

Even if the welding method is changed so as tosimultaneously perform the inside welding and the outside welding of the steel pipe in order to solve the aforementioned problem, since the submerged arc welding method needs flux, the flux drops downwardly at any one place of the inside surface and the outside surface of the steel pipe, making it impossible to simultaneously perform the inside welding and the outside welding of the steel pipe.

To solve the problems of the prior art, the present invention provides a combination welding method of simultaneously performing tungsten arc welding and submerged arc welding by keeping a predetermined separation distance from a tungsten arc weld zone. For the combination welding method according to the present invention, first, a raw material coil is supplied; second, the supplied raw material coil is leveled; third, the leveled raw material is formed in the form of a steel pipe, using forming rollers; fourth, after both ends of the steel pipe to be joined together are placed to face each other, the current is applied to generate resistance heat and the resistance heat is compressed to produced a weld. Like the prior art, the fast process of the electric resistance welding is used until the fourth step.

Fifth, after the steel pipe is welded using the electric resistance welding method, scaling is performed to the inside surface of the steel pipe using a buffing device and a groove is formed in the weld zone of the outside surface of the steel pipe.

Sixth, the tungsten arc welding leads to produce a weld to the inside surface of the steel pipe and the submerged arc welding follows to produce a weld to the outside surface of the steel pipe by keeping a predetermined separationdistance from the tungsten arc weld zone.

After that, heat treatment is applied to the welded steel pipe and the heat-treated steel pipe is straightened. The straightened steel pipe is processed to be beveled and the beveled steel pipe goes through a non-destructive test.

The electric resistance welding method uses one equipment of the forming roller(s) used prior to the electric resistance welding process instead of the following machines essentially required for the tungsten arc welding and the submerged arc welding: a milling machine tool for an edge process, a press for a press bending process, a press for a post-bending process, fixtures and feeding systems to fix-up shaped parts of the steel pipe and equipment necessary for performing the tack welding to the outside surface of the steel pipe. Therefore, since the number of the equipment required for the processes is greatly reduced and the number of the processes is simplified, the electric resistance welding method has the advantage of a fast working speed.

In the present invention, the tungsten arc welding method is applied for the inside welding of the steel pipe since the inside welding method should need no flux, upward welding should be possible and the weld zoneshould have excellent quality, to simultaneously perform the inside welding and the outside welding by keeping the predetermined separation distance from the inside weld zone and the outside weld zone of the steel pipe. In these regards, the tungsten arc welding method is used for the inside welding.

According to the combination welding method of the present invention, the inside welding of the steel pipe is performed by leading with the tungsten arc welding method. The reason why the tungsten arc welding method needs to lead for the inside welding of the steel pipe than the outside welding of the steel pipe is that: upon welding the steel pipe, the steel pipe is secured and a welding torch is inserted through one end of the steel pipe, to be positioned at the other end to produce a weld to the inside surface of the steel pipe. Welding is proceeding as the welding torch moves back to the one end of the steel pipe.

Upon the inside welding of the steel pipe, a boom stand having a tungsten arc welding machine fixed to its front end is inserted into the pipe. Welding starts from the other end of the steel pipe which is opposite to the one end (entrance) through which the boom stand is inserted. The boom stand moves back,securing the tungsten arc welding machine while performing the welding. A line feeding a wire and shielding gas is securely installed to the boom stand in the length direction of the boom stand.

If the outside surface of the steel pipe is welded by leading with the submerged arc welding method and then the inside surface of the steel pipe is welded by the tungsten arc welding method, burn-through which occurs upon the submerged arc welding drops to the tungsten arc welding machine for the following welding, causing a fire to the line/hose feeding the wire or shielding gas which is secured to the boom stand. Therefore, the inside welding needs to lead rather than the outside welding.

In the tungsten arc welding applied for the inside welding of the steel pipe, the welding speed is 200~250mm/min, without any particular influence from the thickness of the steel pipe. In the tungsten arc welding, since the arc is stable, a heat concentration effect is good. The ductility, intensity, air tightness, corrosion resistance of the fusion area is good in comparison with the other welding. However, the tungsten arc welding method used for the inside welding of the steel pipe has a slow welding speed, compared with the submerged arc welding method used for the outside welding. Therefore, in the present invention, two torches are used for the inside welding to increase the welding speed, so that the welding speed of the tungsten arc welding method is the same as the welding speed of the submerged arc welding method.

In the submerged arc welding method applied for the outside welding of the steel pipe, the welding speed decreases as the thickness of the steel pipe increases. Since the depth of weld penetration needs to increase as the thickness increases, the welding speed decreases.

Therefore, the inside welding speed and the outside welding speed are to be the same by selecting the optimum welding speed of the submerged arc welding method which is proper to the thickness of the steel pipe and changing the heat input capacity by adjusting the current respectively applied upon the inside welding and the outside welding.

Table 2

| Deviation in the distance between inside weld and the outside weld | | | |
|---|---|---|---|
| Thickness (mm) | Inside welding speed (mm/min) | Outside welding speed (mm/min) | Distance interval |
| 7.0~9.5 | 400~500 | 600 | 100~150 |
| 9.5~12.7 | | 580 | |
| 12.7~15.9 | | 550 | |
| 15.9~19.1 | | 530 | |
| 19.1~22.2 | | 500 | |

Table 2 above shows the welding speed (the inside welding is based on 2 poles and the outside welding is based on 1 pole) according to the welding methods.

In the combination welding method of the presentinvention,the predetermined separation distance being kept between the leading inside welding of the steel pipe and the following outside welding of the steel pipe is properly 100~150mm from the inside weld zone. This separation distance is to perform the outside welding before,upon the inside welding, the fusion area being 1500°C or higher is cooled and gets to be below the A1 transformation point (723°C) at which the contraction of steel occurs. That is, about 800°C is the difference in the cooling temperature between the temperature of 1500°C after the inside welding and the A1 transformation point (723°C) at which the outside welding should start. It takes about 12~22 seconds for the temperature of about 800°C to be cooled and to radiate heat though it may vary depending on an atmosphere temperature of a working area. If the following submerged arc welding is performed within in this time zone, it is appropriate to minimize bending deformation. Upon comparing this time with the welding speed, the separation distance is 100~150mm as described above.

The separation distance between the leading inside welding of the steel pipe and the following outside welding of the steel pipe is to be shortened if the thickness of the steel pipe is thin, whereas it is to be relatively lengthened if the thickness thereof is thick. If the thickness of the steel pipe is thin, since the depth of welding penetration is low, the fusion area to be overall cooled is small. Therefore, the cooling speed is relatively fast. However, if the thickness of the steel pipe is thick, the separation distance is to be longer for the contrary reason to the case where the thickness is thin.

The separation distance between the leading inside welding of the steel pipe and the following outside welding of the steel pipe is to be lengthened during the summer season when the atmosphere temperature of the working area is high and it is to be shortenedduring the winter cold weather when the atmosphere temperature is low. According to the Stefan-Boltzmann law, theradiated heat emits into the air at the rate of: multiplying the value of subtracting the fourth power of the ambient temperature from the fourth power of the physical body (black body)'s temperature by the surface of the physical body. Therefore, the cooling speed is slow during the summer season when the ambient temperature is high and it is relatively fast during the winter season when the ambient temperature is low.

$$Q = \sigma A(T^4 - T_0^4)$$

Q: quantity of radiated heat

$\sigma$: Stefan-Boltzmann constant

A: surface area of the physical body

T: temperature of the physical body

$T_0$: ambient temperature

The size of the steel pipe to which the combination welding method according to the present invention applies is relatively small in diameter. The size of the steel pipe is about 8~14 inches. The thickness of the steel pipe is about 7.0~22.2 mm and the length of the steel pipe is 12m.

<Embodiment>

In the embodiment of the present invention, the size of a steel pipe to be welded is 355 mm (14inches) in external diameter and the thickness thereof is 12.7 mm. A raw material coil is leveled and the leveled raw material is shaped in the formed of a steel pipe by using forming rollers. Then, after both ends of the shaped steel pipe are placed to face each other, current is applied to generate resistance heat to be compressed, to produce a weld.

Scaling is performed to the inside surface of the electric resistance welded steel pipe by using a buffing device. A groove is formed on the outside surface of the steel pipe. The groove is formed at an angle of 36°. No groove is formed in the inside surface of the steel pipe.

Two welding torches (2 poles) are used for the tungsten arc welding applied to the inside welding of the steel pipe. A tungsten electrode bar is 3.2mm and a wire to be fed is 2mm.

The current supplied to each welding rod is 260A, the voltage is 18V and the heat input capacity is 5.1KJ/cm per torch and totals 10.2KJ/cm. The shielding gas using argon gas blows toward a base material. The depth of welding penetration of a weld zone is set as 5mm and the welding speed is applied at 400mm/min.

For the submerged arc welding performed for the outside welding following the inside welding of the steel pipe, one welding torch (1 pole) is used. The current to be supplied is 550A, the voltage is 30V and the heat input capacity is 18KJ/cm. The outside welding speed is applied at the same speed of 400mm/min as the inside welding speed. The depth of welding penetration which overlaps at the inside weld zone and the outside weld zone is 2mm. The outside temperature is 7°C upon welding. The separation distance between the leading inside welding and the following outside welding is 110mm.

The aforementioned welding processes are followed by a heat treatment process and consequently a straightening process.

The steel pipe welded according to the embodiment of the present invention and the steel pipe welded according to the prior art are compared in terms of their bending extent, straightening time, hardness, tension test such as tensile strength and brittleness at low-temperature as follows:

1. Comparison in terms of the extent of bending

When the inside welding and outside welding of the steel pipe are simultaneously performed by keeping the predetermined separation distance, the extent of bending is decreased by about 50%, compared with the prior art. It is possible to decrease the extent of bending in the steel pipe by performing the outside welding before the weld zone of the inside welding is cooled below the A1 transformation point (723°C).

Table 3

| Straightness measurement (unit: mm) - product specification: $\phi$ 355*12.7*12,000mm - application specification: SPI 5LB -straightness standard: 0.2% of the total length (2mm/1M) | | | | | | | | | | | | | | |
|---|---|---|---|---|---|---|---|---|---|---|---|---|---|---|
| | | | Measured value | | | | | | | | | | | |
| | Welding location | Measurement location | Measurement section | | | | | | | | | | | difference |
| | | | 1 M | 2 M | 3 M | 4 M | 5 M | 6 M | 7 M | 8 M | 9 M | 10 M | 11 M | |
| SAW+SAW (prior art) | Inside | 0° | 0 | 0 | 1 | 3 | 4 | 6 | 7 | 5 | 4 | 2 | 0 | 9 |
| | | 180° | 0 | 1 | 2 | 4 | 5 | 7 | 9 | 4 | 3 | 3 | 1 | |
| | Outside | 0° | 1 | 2 | 2 | 4 | 3 | 4 | 7 | 4 | 4 | 3 | 2 | 7 |
| | | 180° | 2 | 4 | 5 | 5 | 4 | 7 | 7 | 5 | 4 | 4 | 2 | |
| SAW+GTAW (present invention) | Inside, outside | 0° | 0 | 0 | 1 | 1 | 2 | 3 | 2 | 1 | 1 | 0 | 0 | 4 |
| | | 180° | 1 | 0 | 1 | 2 | 3 | 4 | 4 | 3 | 3 | 1 | 0 | |

Table 3 above shows the comparison of the conventional art and the present invention in terms of the extent of bending.

FIG. 5 is a schematic view showing the measurement of the extent of bending of the steel pipe, that is, the straightness of the steel pipe, after welding. This measurement method measures the straightness which is the extent of bending of the steel pipe by installing a horizontal unit connecting one end and the other end of the steel pipe, measuring the distance from the horizontal unit to the steel pipe, and after rotation at 180°, again measuring the distance therebetween. The data measured by this method of measuring the extent of bending of the steel pipe are shown in Table 3.

In Table 3, the extent of bending in the prior art where the submerged arc welding is applied for the outside welding after it is applied for the inside welding is the maximum value around 6~7M which is a middle part of the steel pipe being 12M in total length. After the inside welding, the extent of bending being 7mm and 9mm is measured. After the outside welding, the extent of bending being 7mm and 7mm is measured, noticing that the extent of bending has been corrected by about 2mm by the outside welding.

In the embodiment of the present invention, the extent of bending is measured as 4mm and 4mm around 6~7M which is a middle part of the steel pipe having a total length of 12M at the inside and outside thereof. The extent of bending has been decreased by about 40%, compared with the welding method according to the prior art.

After the inside surface and outside surface of the steel pipe are welded, the welded steel pipe is heat-treated and the heat-treated steel pipe is straightened. The straightened steel pipe is beveled and goes for the non-destructive test, so that the product is finally shipped.

2. Comparison in terms of the straightening time

As the extent of bending decreases after the steel pipe has been welded by the combination welding method according to the present invention, the working time of a post-process of straightening is reduced.

Table 4

| | | Product specification (mm) | | | Measured value | | | Required time (min) | average |
| | | | | | Working time (min) | | | | |
| | | External diameter | thickness | length | Straightening of out-of-roundness | Straightening of straightness | Size check | | |
|---|---|---|---|---|---|---|---|---|---|
| Prior art | 1 | 355 | 12.7 | 12,000 | 14.9 | 11.5 | 8.2 | 34.5 | 40.1 |
| | 2 | 355 | 12.7 | 12,000 | 15.4 | 17.2 | 7.3 | 40 | |
| | 3 | 355 | 15.9 | 12,000 | 18.2 | 11.3 | 14.7 | 44.2 | |
| | 4 | 355 | 12.7 | 12,000 | 15.6 | 19.3 | 6.8 | 41.7 | |
| Present invention | 1 | 355 | 12.7 | 12,000 | 9.8 | 5.4 | 8.3 | 23.5 | 23.6 |
| | 2 | 355 | 15.9 | 12,000 | 10.1 | 6.4 | 7.3 | 23.8 | |

Measurement of straightening time
- equipment name: 3,500ton calibration machine

- reduced time: 17min/ea (about 40% reduction)
- increase of straightening productivity
  35ea/day in prior art → 55ea/day (it is possible to increase production of 20ea/day)

Table 4 above shows data comparing the straightening time of the steel pipe welded using the prior art and the straightening time of the steel pipe welded using the present invention.

In Table 4, when the submerged arc welding is applied for the outside welding after it is applied for the inside welding of the steel pipe according to the prior art, the straightening time of average 40.1 minutes has been required. In the embodiment of the present invention, it took average 23.6 minutes as the straightening time, reducing about 40% of the required time.

3. Comparison in terms of the hardness

Table 5 below shows data resulting from measuring the hardness of the steel pipe welded by the combination welding method according to the present invention.

In Table 5, in the prior art where the submerged arc welding is performed for both inside and outside welding, the result of a hardness test is average 164. In the embodiment of the present invention where the tungsten arc welding is performed for the inside welding and the submerged arc welding is performed for the outside welding, the result of the hardness test is average 157. A valuation basis after the welding is below 345. The hardness according to the embodiment of the present invention is lower than the valuation basis, showing the high quality of welding having no particular difference from the prior art.

Table 5

| Result of hardness test | | | | |
|---|---|---|---|---|
| | | Hardness test (Vickers hardness) | | Remarks |
| Test piece 1 | Prior art | Min | 145 | - inside, outside: SAW |
| | | Max | 186 | |
| | | Average | 164 | |
| Test piece 2 | Present invention | Min | 140 | - outside: SAW |
| | | Max | 181 | - inside: GATW |
| | | Average | 157 | |

Table 5 above shows the comparison of the prior art and the present invention in terms of the hardness test of the weld zone.

4. Comparison in terms of tensile strength (T.S)

Table 6 below shows the results of a tension test of the prior art and the embodiment according to the present invention. In Table 6, in the prior art where the submerged arc welding is performed for both inside and outside welding, as a result of the tension test, the tensile strength is $515N/cm^2$. In the embodiment of the present invention where the tungsten arc welding is performed for the inside welding and the submerged arc welding is performed for the outside welding, the tensile strength is $506N/cm^2$, showing no particular difference from that of the prior art. The tensile strength according to the embodiment of the present invention results in exceeding a pass criterion, $415N/cm^2$. In addition, an yield strength (YS) in the embodiment of the present invention is $382N/cm^2$, exceeding a pass criterion of the yield strength, $245N/cm^2$. An elongation length (E.L) in the embodiment of the present invention is measured as 28.1 mm, showing the mechanical properties passing a pass criterion of the extension length, 50mm or less. In addition, the embodiment of the present invention shows the excellent quality of welding having no particular difference from the prior art.

Table 6

| Tensile strength | | Location | Tension test | | |
|---|---|---|---|---|---|
| | | | T.S (spec. 415N/cm$^2$) | Y.S (spec. 245N/cm$^2$) | E.L (%) Gage length:50mm |
| Test piece 1 | Prior art | Weld zone | 515 | 403 | 28.1 |
| Test piece 2 | Present invention | | 506 | 382 | 26.7 |

Table 6 above shows the comparison of the prior art and the present invention in terms of the tension test of the weld zone.

5. Comparison in terms of low-temperature impact value

Table 7 shows data obtained by measuring a low-temperature impact (-20°C) which is the most important mechanical property when the materials to be welded are used for marine environment. In Table 7, in the prior art where the submerged arc welding is performed for both inside and outside welding, the brittleness at low-temperature is 135.1 Jule. In the embodiment of the present invention where the tungsten arc welding is performed for the inside welding and the submerged arc welding is performed for the outside welding, the brittleness at low-temperature is measured as 130 Jule. Therefore, the embodiment of the present invention provides the mechanical properties exceeding four times of 27 Jule, a pass criterion of the weld zone.

Table 7

| Low-temperature impact (-20°C) | | Location | Result of test | | | | Remarks |
|---|---|---|---|---|---|---|---|
| | | | Temp -20°C | | | | |
| | | | 1 | 2 | 3 | Avg. | |
| Test piece 1 | Prior art | Weld zone | 151.6 | 127.3 | 126.4 | 135.1 | - inside, outside: SAW |
| Test piece 2 | Present invention | | 123 | 125.9 | 141.1 | 130 | - outside: SAW<br>- inside: GATW |

Table 7 above shows the comparison of the prior art and the present invention in the test of brittleness at low-temperature of the weld zone.
FIG. 6 shows a cross-sectional picture of the weld zone produced by performing the submerged arc welding for both of the inside and outside welding and a cross-sectional picture of the weld zone produced by leading with the tungsten arc welding for the inside welding and following with the submerged arc welding for the outside welding . As shown in FIG. 6, the size of the inside weld zone using the tungsten arc welding is relatively small, compared with the size of the outside weld zone using the submerged arc welding. The point that the size of the weld zone is small means that the area of a heat-affected zone is small. Since the heat-affected zone is small, deformation also occurs less.
As described above, the combination welding method leading with the tungsten arc welding method for the inside welding of the steel pipe and following with the submerged arc welding method for the outside welding of the steel pipe by keeping the predetermined separation distance from the tungsten arc weld zone solves the problems of the conventional combination welding method by firstly performing the submerged arc welding to the inside surface of the steel pipe and secondarily performing the submerged arc welding to the outside surface of the steel pipeafter the electric resistance welding. That is, the combination welding method according to the present invention solves the conventional combination welding method's problem in that even though the outside welding is made, the extent of bending which is sufficient to correct the extent of bending which occurred upon the inside welding to the original state does not occur upon the outside welding. Further, the combination welding method according to the present invention solves the conventional combination welding method's other problem in that, when the inside welding and the outside welding are simultaneously proceeding, since the flux drops downwardly, it is impossible to perform normal welding. In the combination welding method according to the present invention, since the inside welding and the outside welding are simultaneously proceeding by keeping the predetermined separation distance, generally the welding time is shortened. Furthermore, since the outside welding is performed before the fusion area reaches below the A1 transformation point after the inside welding, the bending of the steel pipe is properly controlled after the welding and therefore the straightening time in the post-process is shortened.

The invention has been described using preferred exemplary embodiments. However, it is to be understood that the scope of the invention is not limited to the disclosed embodiments. On the contrary, the scope of the invention is intended to include various modifications and alternative arrangements within the capabilities of persons skilled in the art using presently known or future technologies and equivalents. The scope of the claims, therefore, should be accorded the broadest interpretation so as to encompass all such modifications and similar arrangements.

**Claims**

1. A combination welding method for simultaneously performing tungsten arc welding and submerged arc welding, the method comprising the steps of:

    forming a steel sheet in the form of a steel pipe by using forming rollers;
    performing electric resistance welding to ends to be joined together in the roll-formed steel pipe;
    performing tungsten arc welding to an inside surface of the ends of the steel pipe; and
    performing submerged arc welding to an outside surface of the ends of the steel pipe.

2. The combination welding method of Claim 1, wherein the step of forming the steel pipe follows the steps of:

    cutting a raw material;
    feeding a coil of the raw material (uncoiling); and
    leveling the fed coil of the raw material.

3. The combination welding method of Claim 1, between the step of performing the electric resistance welding and the step of performing the tungsten arc welding to the ends of the steel pipe formed by the rollers, further comprising the step of:

    performing scaling to the inside surface of the steel pipe using a buffing device and forming a groove in the weld zone of the outside surface of the steel pipe.

4. The combination welding method of Claim 1, wherein the inside surface of the ends of the steel pipe is welded by leading with tungsten arc welding and simultaneously the outside surface of the ends of the steel pipe is welded by following with submerged arc welding and keeping a separation distance of 100~150mm from the tungsten arc weld zone.

5. The combination welding method of Claim 1, wherein the separation distance between the tungsten arc weld zone and the submerged arc weld zone is increased if an outside temperature is high and it is decreased if the outside temperature is low

6. The combination welding method of Claim 1, wherein the step of performing the submerged arc welding to the outside surface of the steel pipe is followed with the steps of:

    performing heat-treatment to the welded steel pipe;
    straightening the heat-treated steel pipe;
    performing a beveling process to the straightened steel pipe; and
    performing a non-destructive test to the beveling processed steel pipe

7. The combination welding method of Claim 1, wherein the size of the steel pipe to which the combination welding method applies is 8~14 inches

8. The combination welding method of Claim 1, wherein the thickness of the steel pipe to which the combination welding method applies is 7.0~22.2mm and the length of the steel pipe is 12 meters.

9. A steel pipe manufactured by the combination welding method of any one of Claims 1-8.

Uncoiler
– feeding raw material coil

Leveler
– leveling the raw material coil

Forming
– forming a pipe form using rollers

Welder
– welding using ERW method

06. Inside Welding
- inside welding using SAW method

07. Long Seam Milling
–removing outside 1-pass
using milling method
for welding quality improvement

08. Outside Welding
– outside welding using SAW method

FIG. 2

inside surface welding

after
welding

Welding bead

outside surface welding

Welding bead

after
welding

-- welding using ERW method

the combination process
of SAW+GTAW

Heat treatment

Straightening

Non-destructive test

FIG. 5

the measurement of the straightness

invention, the occurrence of bending of a steel pipe is reduced and a welding time is shortened since the inside welding and the outside welding are simultaneously performed by keeping the predetermined separation distance. In addition, since the outside welding is performed before a fusion area temperature is below an A1 transformation point after the inside welding, the bending of the steel pipe is properly controlled after the welding and therefore straightening time in a post-process is shortened.

[Figure 3]

EP 2 942 146 A2

FIG. 3

Outside welding

Inside welding

FIG 4

Uncoiler
– feeding raw material coil

Leveler
– leveling the raw material coil

Forming
– forming a pipe form using rollers

In/Out Side Welding

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020140041892
- KR 101191711

- KR 1020090130955